# EUROPEAN PATENT APPLICATION

(11) **EP 1 139 278 A2**
(43) Date of publication of application: **04.10.2001**
(21) Application number: 01102523.6
(22) Date of filing: 05.02.2001
(51) Int. Cl.: G06K 19/07, G06K 7/00

(54) **A method of reading information from a data carrier attached to stacked objects**

(30) Priority: 31.03.2000 JP 2000101209
(71) Applicant: Hitachi, Ltd., Chiyoda-ku, Tokyo 101-8010 (JP)
(72) Inventor: Miura, Masaya, c/o Hitachi, Ltd., Int. Prop. Group, Chiyoda-ku, Tokyo 100-8220 (JP); Miyazaki, Yutaka, c/o Hitachi, Ltd., Chiyoda-ku, Tokyo 100-8220 (JP); Usami, Mitsuo, c/o Hitachi, Ltd., Int. Prop. Group, Chiyoda-ku, Tokyo 100-8220 (JP); Yoshida, Takashi, c/o Hitachi, Ltd., Chiyoda-ku, Tokyo 100-8220 (JP)
(74) Representative: Strehl Schübel-Hopf & Partner

(57) **Abstract**

In a data carrier information reading method for reading data from a data carrier (2) including a data storage device (201) and a data communicator device (202), a state in which a plurality of sheets of objective items with data carriers attached thereto are accumulated in a pile in an order is shifted to a state in which any of positions respectively of the data carriers are not overlapped with any one of the objective items to thereby read information from the data carriers of the objective items in the shifted state.

## Description

### BACKGROUND OF THE INVENTION

The present invention relates to processing in which data is correctly read from a radio frequency data carrier (RFID) attached to sheets of paper, cards, or the like or embedded as watermark in sheets of paper, cards, or the like during manufacturing thereof and the number of the sheets or cards is counted or is collated.

The item or article management using bar codes in the prior art has been insufficient in identifying capability and information storage capacity. To overcome the difficulty, there has been introduced an item management system using a radio frequency data carrier in which information of an objective item can be stored and which can be attached to the item.

In a state of the prior art, when a plurality of sheets of paper or cards to each of which a radio frequency data carrier is attached or in each of which a radio frequency data carrier is embedded as watermark during manufacturing thereof are accumulated onto each other in a pile, the number of sheets of paper or cards of which radio frequency data carriers can be correctly read is limited because of, for example, communication distance and radio wave interference.

### SUMMARY OF THE INVENTION

It is therefore an object of the present invention to provide a method which uses a device to shift positions of radio frequency data carriers of the sheets of paper or the cards with respective radio frequency data carriers such that the positions are separated from any other sheets of paper and the cards and a device to correctly read data from the radio frequency data carriers. The method thereby guarantees efficiency equivalent to efficiency of an anti-collision feature to remarkably reduce the number of processes required for inspection or check of the number of sheets of paper or cards and for collation thereof in the prior art.

To achieve the object in accordance with the present invention, there is a data carrier information reading method for reading data from a data carrier including data storage means and data communicator means, comprising the steps of shifting a state in which a plurality of sheets of objective items respectively with data carriers attached thereto are accumulated in a pile to a state in which any of positions respectively of the data carriers are not overlapped with any one of the objective items and reading information from the data carriers.

Even when objective items or articles to which data carriers are attached are accumulated in a bundle, the number of items to be read can be correctly counted and data collation thereof can be appropriately carried out. Moreover, for example, automatic check of wrong classification can be conducted. This advantageously leads to effect of improving quality of the operation.

### BRIEF DESCRIPTION OF THE DRAWINGS

The objects and features of the present invention will become more apparent from the consideration of the following detailed description taken in conjunction with the accompanying drawings in which:
Fig. 1A is a diagram showing a plurality of items to be read in accordance with the present invention;
Fig. 1B is a diagram showing an embodiment of a data carrier reader according to the present invention;
Fig. 2 is a diagram showing a position of sheets of paper or the like to each of which a radio frequency data carrier is attached or in each of which is embedded as watermark during the manufacturing thereof;
Fig. 3 is a diagram showing a position of sheets of paper or the like to each of which a radio frequency data carrier is attached or in each of which is embedded as watermark during the manufacturing thereof;
Fig. 4 is a diagram showing a position of sheets of paper or the like to each of which a radio frequency data carrier is attached or in each of which is embedded as watermark during the manufacturing thereof;
Fig. 5 is a diagram showing a method of a device which shifts sheets of paper or cards with respective radio frequency data carriers to separate positions of the radio frequency data carriers from any other sheets in accordance with the present invention;
Fig. 6 is a diagram showing a device for and a method of reading radio frequency data carriers in accordance with the present invention;
Fig. 7 is a diagram showing a device for a method of shifting sheets of paper or cards with respective radio frequency data carriers to separate positions of the radio frequency data carriers from any other sheets and reading the radio frequency data carriers in accordance with the present invention;
Fig. 8 is a front view of a radio frequency data carrier reader and a read start position in accordance with the present invention;
Fig. 9 is a side view of a radio frequency data carrier reader and a read start position in accordance with the present invention;
Fig. 10 is a front view of a radio frequency data carrier reader and a read end position in accordance with the present invention;
Fig. 11 is a side view of a radio frequency data carrier reader and a read end position in accordance with the present invention;
Fig. 12 is a diagram showing radio frequency data carriers, a device to read the data carriers, and communication paths between the data carriers and the reader in accordance with the present invention;
Fig. 13 is a flowchart showing operation (for example, in a post office) to write information in a data carrier when an item of registered mail is received; and
Fig. 14 is a flowchart showing operation (for example, in a post office) to read data to confirm the number of items of registered mail.

### DESCRIPTION OF THE EMBODIMENTS

Description will now be given of an embodiment of the present invention by referring to the drawings.

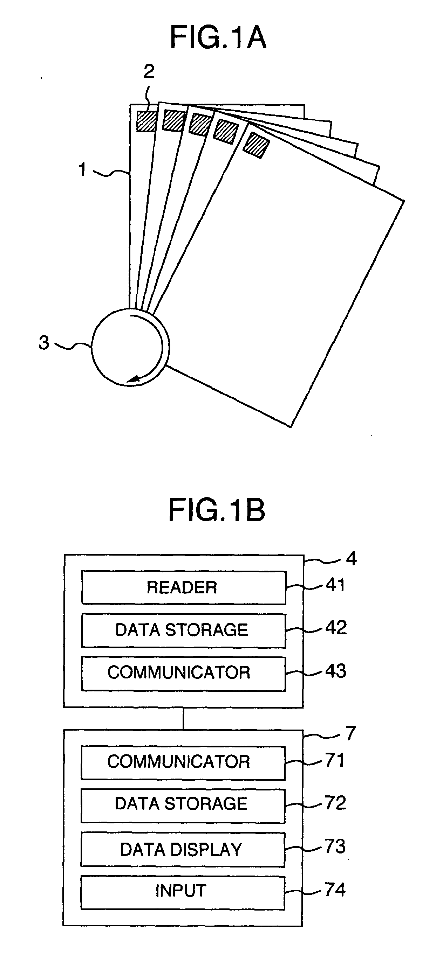

Figs. 1A and 1B show a plurality of objective items to be read and a configuration of a radio frequency data carrier reader.

The configuration includes sheets of paper or cards 1 on each of which a radio frequency data carrier is attached or in each of which a radio frequency data carrier is embedded as watermark during the manufacturing thereof, a radio data carrier 2, a device 3 to slightly shift the sheets of paper or cards with respective radio frequency data carriers such that positions respectively of the data carriers are not overlapped with any other sheets of paper or cards, a device 4 to read information written in a data storage of each data carrier 2, a reader section 41 of the data carrier reader 4, a data storage 42 of the reader 4, a communicator section 43 of the reader 4, a terminal 7 to accumulate and to control information received from the communicator 43 of the reader 4, a communicator section 71, a data storage 72, a data display 73, and an input section 74. "To embed a radio frequency data carrier 2 in a sheet of paper or a card during the manufacturing thereof" means that a radio frequency data carrier 2 is buried therein.

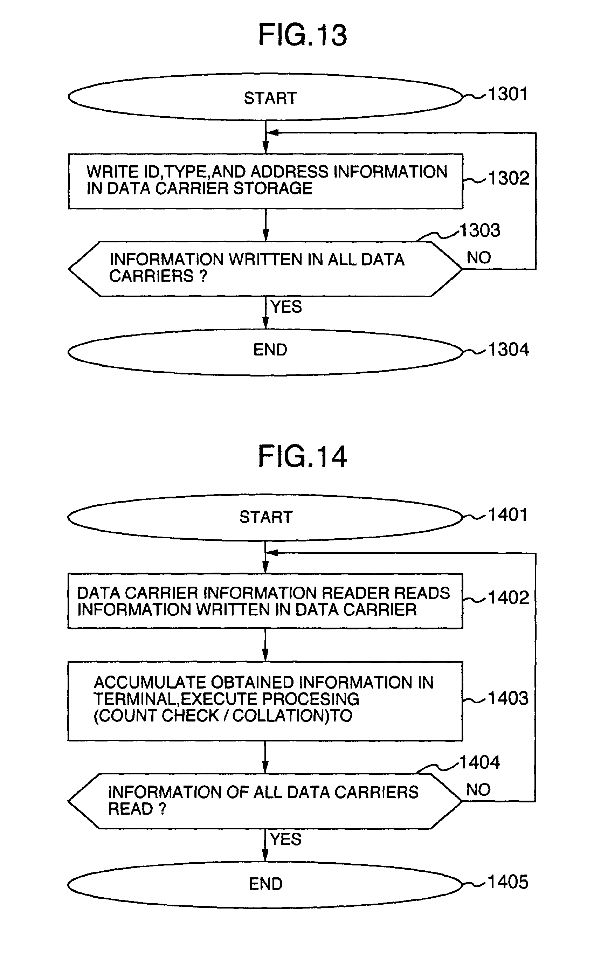

Referring now to Figs. 13 and 14, description will be given of a case in which the present invention is applied to items of registered mail.

As can be seen from the flowchart of Fig. 13, to receive a batch of items of registered mail (for example, in a post office), information of an identifier, a type (ordinary registered mail, simplified registered mail, delivery record mail, or the like), and an address assigned to the data carrier of each item of registered mail is stored in the data storage of the data carrier (step 1302) and then whether or not information has been written in all data carriers is checked (step 1303). If information has not been written yet in all data carriers, process returns to step 1302. Otherwise, the processing is terminated (step 1304).

Referring now to the flowchart of Fig. 14, description will be given of a case to execute processing to confirm the number of items of registered mail. The data carrier information reader 4 reads information written in the data carriers (step 1402). The information is accumulated as data in the terminal 7. According to the data thus accumulated, processing (count check/collation) is executed to confirm the number of mail items by type or address. Results of the processing are accumulated to be displayed later (step 1403). Whether or not information of all data carriers have been already read is checked (step 1404). If there remains information of data carriers to be read, process goes to step 1402. Otherwise, the processing is terminated (step 1405).

By correctly reading the identifiers the type, the address, and the number of items of registered mail from each data carrier, it is possible to detect a wrong classification (for example, a mail item to be sent to office A is sent to office B) caused by the present manual operation in which the type and/or the address are not correctly identified in some cases. This advantageously improve quality of the operation.

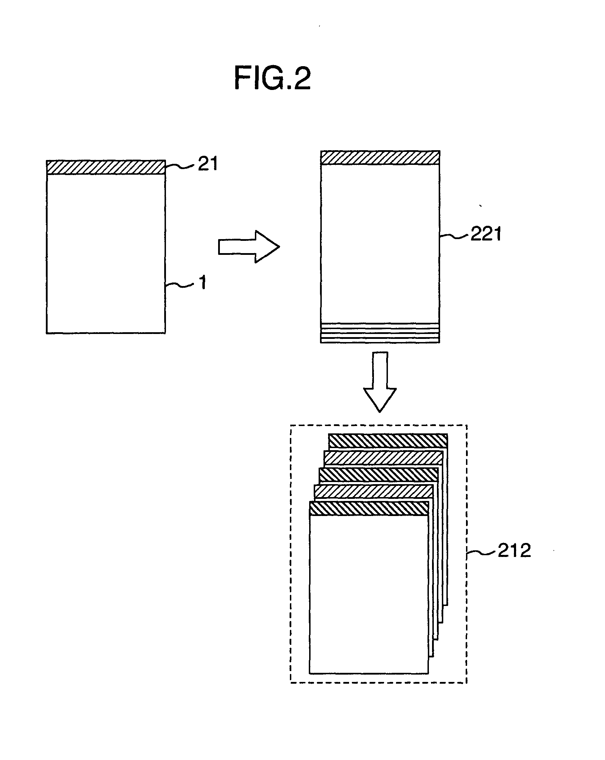

Fig. 2 shows a position of a sheet of paper or a card at which a data carrier 21 is to be attached or embedded. When an upper position and a lower position are assumed to be expressed in a longitudinal direction of the sheets of paper or the cards, the data carriers 21 are arranged in an upper end section or a lower end section of the sheet of the card. Under this condition, a reference numeral 211 indicates a situation in which the sheets or cards each of which includes the data carrier in an upper end section or a lower end section thereof are accumulated in a pile. In a state 212, the sheets or cards are longitudinally shifted such that the data carrier positions are separated from each other in the longitudinal direction, namely, are not overlapped with any other sheets or cards.

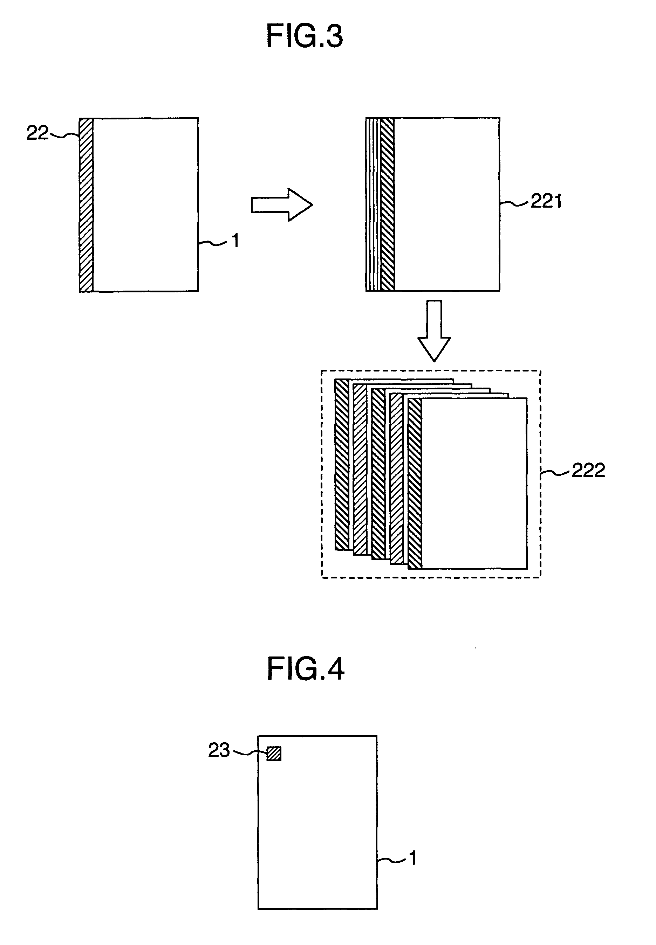

Fig. 3 shows a position of a sheet of paper or a card at which a data carrier 22 is to be attached or embedded. When an upper position and a lower position are assumed to be expressed in a longitudinal direction of the sheets of paper or the cards, the data carriers 22 are arranged in a right end section or a left end section of the sheet of the card. Under this condition, a reference numeral 221 indicates a situation in which the sheets or cards each of which includes the data carrier in a right end section or a left end section thereof are accumulated in a pile. In a state 222, the sheets or cards are shifted in a horizontal direction such that the data carrier positions are horizontally separated from each other, namely, are not overlapped with any other sheets or cards.

Fig. 4 shows a position of a sheet of paper or a card at which a data carrier 23 is to be attached or embedded. The data carrier 23 is arranged in an upper left corner of the sheet of the card.

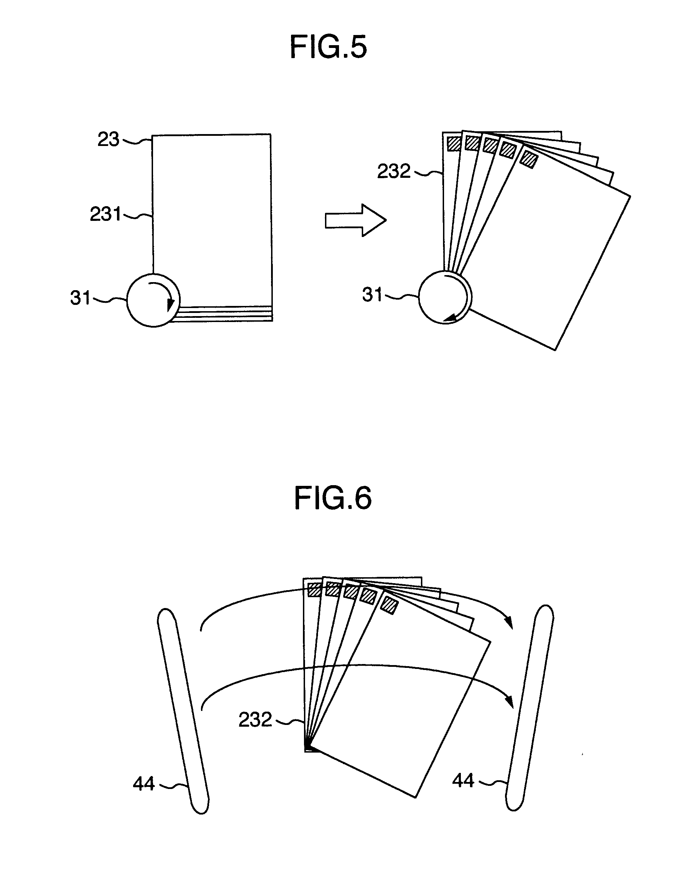

Fig. 5 shows a device 31 which slightly shifts the sheets of paper or cards such that the positions of the data carriers are not overlapped with any other sheets of paper or cards. Reference numeral 231 indicates a state in which the sheets of paper or cards respectively with data carriers on the upper-left corner are accumulated in a pile. Reference numeral 232 indicates a state in which the sheets of paper or cards are clockwise or counterclockwise turned about a point such that the positions of the data carriers are not overlapped with any other sheets of paper or cards.

Fig. 6 shows an embodiment of the present invention using a data carrier reader 44 with a contour of a rod. By moving the rod-shaped data carrier reader 44 is moved from left to right over the sheets of paper or cards in the state 232 of Fig. 5 with the reader 44 being brought into contact with the sheets of paper or being separated therefrom, information stored in the data carriers are read by the reader 44.

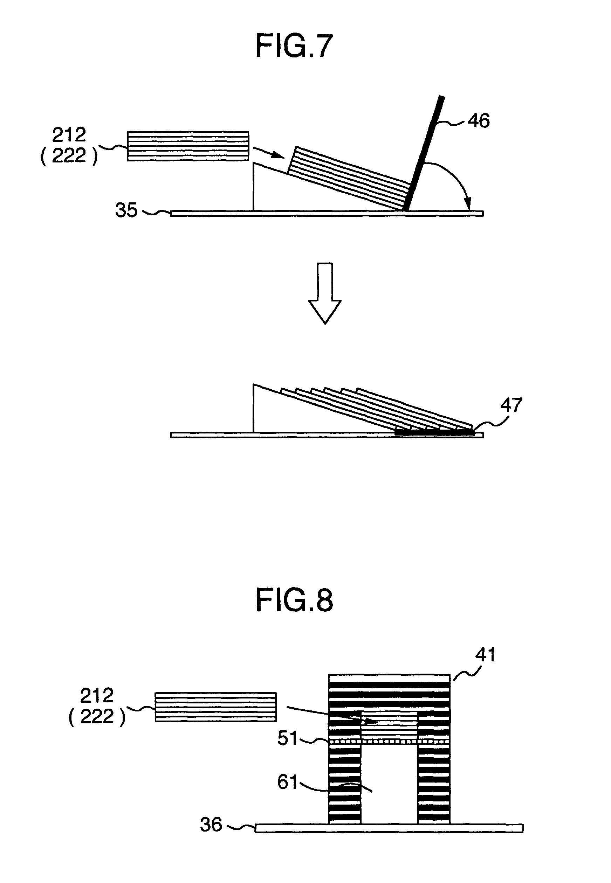

Fig. 7 shows an arrangement of a pile of sheets of paper or cards with data carriers as above, a device 35 to slightly shift the sheets or the cards such that the positions of the data carriers are not overlapped with any other sheets of paper or cards, and a data carrier 46 (47). In a state 212, the sheets or cards are accumulated in an order. In a state 212, the sheets or cards are shifted by the device 35 on the reader (46). When the reader is inclined (47), the sheets or cards pass over the reader so that the reader reads information stored in the data carriers.

Fig. 8 shows a state 212 (222) in which the sheets or cards are accumulated in an order and a plan view of a data carrier reader 36 including reader sections 41 horizontally indicated by bold solid lines arranged in the vertical direction. Reference numeral 51 indicates a plate on which the sheets or cards are placed. The state shown in Fig. 8 is a read start position of the system.

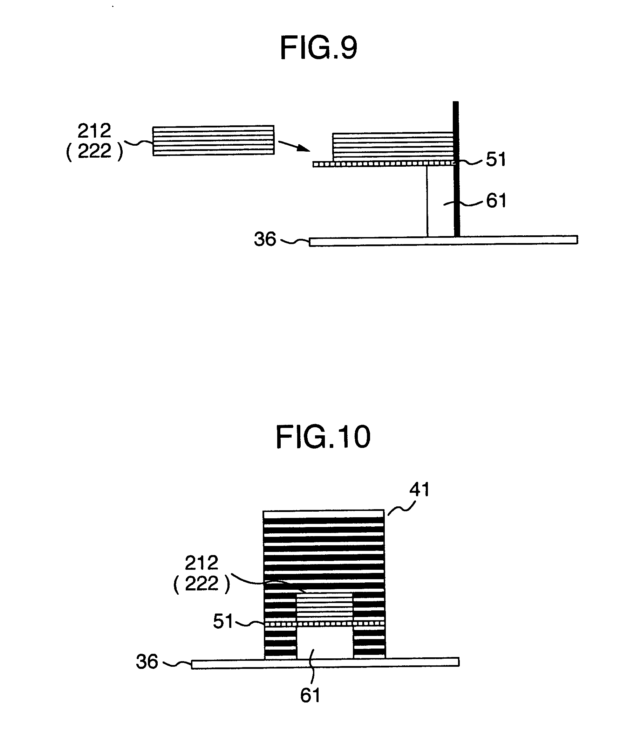

Fig. 9 shows a state 212 (222) in which a plurality of sheets or cards with data carriers disposed as described above are accumulated in an order, a plan view of a data carrier reader 36, and a plate 51 on which the sheets or cards are placed.

Fig. 10 shows a state 212 (222) in which a plurality of sheets or cards with data carriers disposed as above are accumulated in an order, a plan view of a data carrier reader 36, and a plurality of reader sections 41 of the reader 36. In this example, a plate 51 on which the sheets or cards are placed is lowered to a read end position. The plate 51 and a plate supporter 61 are driven in the vertical direction. When the sheets of paper or cards with data carriers moves from a read start position to the read end position through the reader sections 41 of the reader 36 with the sheets or cards being brought into contact with the reader 36 or being separated therefrom, information stored in the data carriers are read by the reader 36.

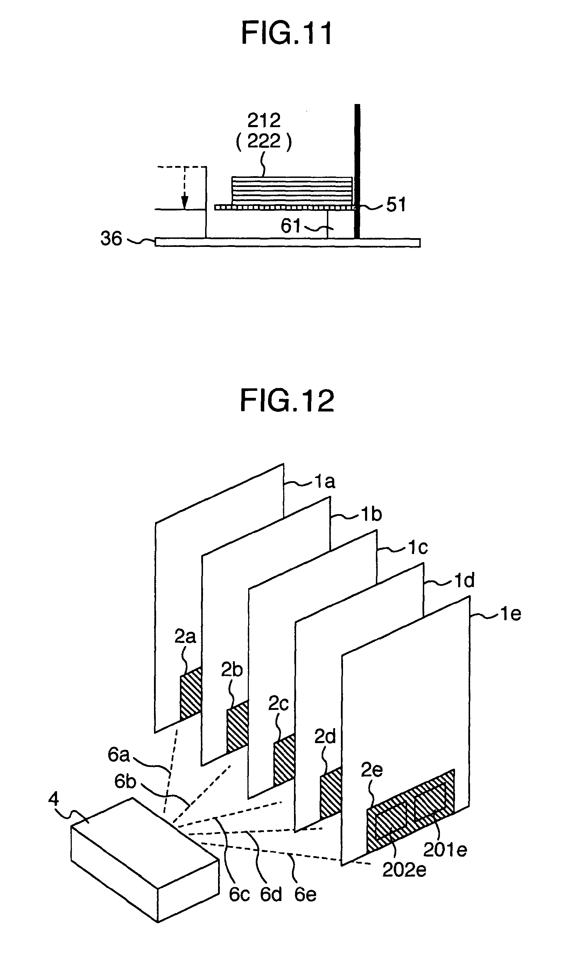

Fig. 11 shows a state 212 (222) in which a plurality of sheets or cards with data carriers are accumulated in an order and a side view of a radio frequency data carrier reader 36 in a read end state. Distance indicated by a dotted line is difference in height between a read start position and a read end position. When the sheets of paper or cards with data carriers moves from the read start position to the read end position through the reader sections 41 of the reader 36 with the sheets or cards being brought into contact with the reader 36 or being separated therefrom, information stored in the data carriers are read by the reader 36.

Fig. 12 shows a data carrier reading system in which data carriers 2a to 2e are respectively attached to a plurality of objective items 1a to 1e such that a data reader 4 reads data from the data carriers of the respective items via radio wave transmission paths between the data reader 4 and the data carriers. Each data carrier 2a-2e has a data storage means 201 and a data communication means 202. By separating the transmission paths from each other, the data carriers respective store therein identifiers respectively corresponding to the objective items. Disposed in the data carriers 2a to 2e are transmission sections to respectively transmit the respective identifiers. Therefore, the data reader 4 can read information regarding the identifiers. The identifiers may be sequential numbers. As can be seen from Fig. 1, the data reader 4 includes a reading section 41, a data storage 42, and a communicator section 43. Identifiers read by the reading section 41 is stored in the data storage 43. The communicator 43 is connected via a network or the like to a terminal 7 such as a personal computer and transmits the obtained identifiers to the terminal 7. When a personal computer is used, whether or not an identifier is read is managed. When a plurality of readers 4 are disposed, which one of the reader read the identifier can be displayed by the terminal 7. By displaying the transporting path, the manager can appropriately carry out the management. When the objective item is transported together with a parcel, a transporting path of the objective item can be managed.

When the present invention is applied to operation of record mail items such as registered mail in the postal job, the operation is conducted in a small room, i.e., a room in a post office. Therefore, it is difficult to install a large-sized machine or apparatus such as a sorter for mail items. The present invention provides a small-sized machine or apparatus which can be installed in such a small room.

In accordance with the present invention, data can be read from data carriers attached respectively to sheets of paper or cards, and the number of sheets of paper or cards accumulated in a pile can be corrected counted.

While the present invention has been described in detail and pictorially in the accompanying drawings, it is not limited to such details since many changes and modifications recognizable to those of ordinary skill in the art may be made to the invention without departing from the spirit and scope thereof.

## Claims

1. A data carrier information reading method for reading data from a data carrier (2) including data storage means (202) and data communicator means (201), comprising the steps of:
shifting a state in which a plurality of sheets of objective items respectively with data carriers attached thereto are accumulated in a pile to a state in which any of positions respectively of the data carriers are not overlapped with any one of the objective items; and
reading information from the data carriers.

2. A data carrier information reading method, comprising the steps of:
shifting a state in which a plurality of sheets of objective items respectively with data carriers (2) each including data storage means (201) and data communicator means (202) attached respectively thereto are accumulated in a pile in an order to a state in which any of positions respectively of the data carriers are not overlapped with any one of the objective items; and
reading information written in the data storage means of the data carriers.

3. A data carrier information reading method, comprising the steps of:
shifting a state in which a plurality of sheets of objective items respectively with data carriers (2) each including data storage means (201) and data communicator means (202) attached respectively thereto are accumulated in a pile to a state in which any of positions respectively of the data carriers are not overlapped with any one of the objective items;
moving a reading device (4) to read the data carrier in a state in which the carrier is brought into contact with the objective items or is separated therefrom; and
reading information written in the data storage means of the data carriers.

4. A data processing system, comprising:
means (3) for shifting a state in which a plurality of sheets of objective items respectively with data carriers (2) each including data storage means (201) and data communicator means (202) attached respectively thereto are accumulated in a pile to a state in which any of positions respectively of the data carriers are not overlapped with any one of the objective items; and
a reading device (4) which can be moved,
said device including means (41) for reading information written in the data storage means of the data carriers.

5. A data processing system, comprising:
a data carrier (2) including data storage means (201) and data communicator means (202);
means (3) for shifting a state in which a plurality of sheets of objective items respectively with said data carriers (2) attached respectively thereto are accumulated in an arrangement of a pile in an order to a state in which any of positions respectively of said data carriers are not overlapped with any one of the objective items;
reading means (4, 41) for reading, in the shifted state, information written in said data storage section of said data carrier in a state in which said carrier is brought into contact with the objective items or is separated therefrom; and
means (42) for storing therein the information read by said reading means.

6. A data processing system, comprising:
a data carrier (2) including data storage means (201) and data communicator means (202);
means (3) for shifting a state in which a plurality of sheets of objective items respectively with said data carriers (2) attached respectively thereto are accumulated in a pile to a state in which any of positions respectively of said data carriers are not overlapped with any one of the objective items;
reading means (4, 41) for reading, in the shifted state, information written in said data storage means of said data carrier in a state in which said carrier is brought into contact with the objective items or is separated therefrom; and
means (42) for holding the information read by said reading means.

7. A method of acquiring information from an objective item with a data carrier (2) attached thereto, comprising the steps of:
attaching a data carrier (2) to each of objective items, the data carrier storing therein information to identify the associated objective item;
accumulating a plurality of objective items in a pile;
disposing a plurality of data carrier reading means (4, 41) in a direction in which the objective items are accumulated (Figs. 8 and 10);
moving the data carrier reading means in the direction; and
reading identifying information from the data carriers attached respectively to the objective items.

8. A method of acquiring information from an objective item with a data carrier (2) attached thereto, comprising the steps of:
attaching a data carrier (2) to each of objective items, the data carrier storing therein information to identify the associated objective item;
accumulating a plurality of objective items in a pile;
moving the objective items relative to data carrier reading means (Figs. 8 and 10); and
reading identifying information from the data carriers attached respectively to the objective items.
